Europäisches Patentamt

European Patent Office

Office européen des brevets

(11) Veröffentlichungsnummer: **0 322 512**
**A2**

## EUROPÄISCHE PATENTANMELDUNG

(21) Anmeldenummer: 88114574.2

(22) Anmeldetag: 07.09.88

(51) Int. Cl.⁴: **B29C 49/22 , B65D 1/02 , //B29K23:00**

(30) Priorität: 31.12.87 DE 3744639

(43) Veröffentlichungstag der Anmeldung:
05.07.89 Patentblatt 89/27

(84) Benannte Vertragsstaaten:
**AT BE CH DE ES FR GB GR IT LI LU NL SE**

(71) Anmelder: **Henkel Kommanditgesellschaft auf Aktien**
**Postfach 1100 Henkelstrasse 67**
**D-4000 Düsseldorf 1(DE)**

(72) Erfinder: **Bücheler, Herbert, Dipl.-Ing.**
**Erlenweg 26**
**D-4006 Erkrath 2(DE)**

(74) Vertreter: **Patentanwälte Meinke und Dabringhaus Dipl.-Ing. J. Meinke Dipl.-Ing. W. Dabringhaus**
**Westenhellweg 67**
**D-4600 Dortmund 1(DE)**

(54) **Hohlkörper aus Kunststoff mit einer glänzenden Aussenfläche.**

(57) Es soll auf einfache Weise ohne besonders exakte Temperaturführung bei der Herstellung ein Hohlkörper aus Kunststoff mit einer glänzenden Außenfläche, welcher durch ein Extrusionsblasverfahren aus einem zweischichtigen Schlauch gebildet ist, geschaffen werden, welcher einerseits umweltneutral und kostengünstig ist, andererseits eine besonders glänzende Oberfläche aufweist.

Dies wird dadurch erreicht, daß der Schlauch von einer HDPE (Polyethylen hoher Dichte)-Innenschicht (5) und einer ungefärbten Polyethylen-Außenschicht (6) mit Additiven gebildet ist.

# Hohlkörper aus Kunststoff mit einer glänzenden Außenfläche

Die Erfindung betrifft einen Hohlkörper aus Kunststoff mit einer glänzenden Außenfläche, welcher durch ein Extrusionsblasverfahren aus einem zweischichtigen Schlauch gebildet ist.

Derartige Hohlkörper sind bekannt. Sie werden beispielsweise als Verpackungsmaterial für Spül- und Reinigungsmittel eingesetzt. Es ist wünschenswert, daß die Außenfläche des Hohlkörpers einen sauberen und glänzenden Eindruck macht, um den Käufer zum Kauf des Reinigungsproduktes anzuregen.

Ein gattungsgemäßer Hohlkörper ist aus der DE-PS 25 28 954 bekannt. In dieser Druckschrift ist ein extrudierter Hohlkörper aus einem zweischichtigen thermoplastischem Kunststoff beschrieben, wobei das Extrudieren der Kunststoffaußenschicht bei einer Temperatur oberhalb des Blasformschmelztemperaturbereichs des Kunststoffes erfolgt und die Innenschicht als Tragschicht dient. Dieser Hohlkörper weist aber nur dann eine ausreichend glänzende Oberfläche auf, wenn während des Herstellungsprozesses eine exakte Temperaturführung eingehalten werden kann, d.h. bei einem geringen Abweichen von der vorbestimmten Temperatur ist kein befriedigender Oberflächenglanz zu erzielen.

Demgegenüber besteht die Aufgabe der Erfindung darin, auf einfache Weise einen zweischichtigen Hohlkörper aus Kunststoff ohne besonders exakte Temperaturführung bei der Herstellung zu schaffen, welcher einerseits umweltneutral und kostengünstig ist, andererseits eine besonders glänzende Oberfläche aufweist.

Diese Aufgabe wird mit einem Hohlkörper der eingangs bezeichneten Art erfindungsgemäß dadurch gelöst, daß der Schlauch von einer HDPE (Polyethylen hoher Dichte)-Innen-schicht und einer ungefärbten Polyethylen-Außenschicht mit Additiven gebildet ist.

Es hat sich überraschend herausgestellt, daß ohne besondere Anforderungen an eine Temperaturgenauigkeit beim Herstellungsprozeß, d.h. also auf besonders einfache Art und Weise, ein derartiger zweischichtiger Hohlkörper eine besonders glänzende Außenfläche aufweist. Dabei ist die Massetemperatur der Außenschicht bei der Extrusion so gewählt, daß sie unter der Massetemperatur der Innenschicht liegt oder dieser Temperatur entspricht. Der Glanzeffekt wird besonders dadurch verstärkt, daß der Außenschicht Additive zugefügt sind, die das Gleitverhalten in Abfüllanlagen beeinflussen. Außerdem ist das Hohlkörpermaterial umweltverträglich und preisgünstig und erfüllt die erforderlichen Festigkeitsanforderungen. Zusätzlich ist durch die Verwendung physikalisch-chemisch sehr ähnlicher Polymere sichergestellt, daß der zweischichtige Aufbau ohne Einsatz eines Haftvermittlers erreicht werden kann und lange Zeit ohne Beeinträchtigung, z.B. durch Abblättern der äußeren Schicht, bestehen bleibt.

Alternativ sieht die Erfindung vor, daß die Außenschicht aus LDPE (Polyethylen niedriger Dichte) oder HDPE (Polyethylen hoher Dichte) gebildet ist, wobei die LDPE-Dichte etwa 0,918 - 0,930 g/cm$^3$ und die HDPE-Dichte etwa 0,950 -0,960 g/cm$^3$ beträgt. Es hat sich herausgestellt, daß beide Materialien besonders gut geeignet sind, da ihre physikalisch-chemische Strukter der der Innenschicht sehr ähnlich ist oder entspricht.

Als besonders günstig hat es sich herausgestellt, wenn die Additive aus Ölsäureamid bestehen. Mit diesen Gleitmitteln sind hinsichtlich Festigkeitseigenschaften und Glanzeffekten besonders gute Ergebnisse erzielbar.

Weiterhin hat es sich als besonders günstig herausgestellt, wenn der Anteil der Innenschicht etwa 90 % und der Anteil der Außenschicht etwa 10 % beträgt.

Die Erfindung sieht auch vor, daß die Innenschicht eingefärbt ist. Durch die Art dieser Einfärbung wird die Farbgebung des Hohlkörpers bestimmt, außerdem wird in Verbindung mit der farblosen Außenschicht ein ganz besonders guter Glanzeffekt erzielt.

Schließlich ist in besonders vorteilhafter Ausgestaltung der Erfindung vorgesehen, daß der Hohlkörper zur Glättung der Außenschicht einer Flammvorbehandlung unterzogen worden ist. Durch eine solche, an sich bekannte Flammvorbehandlung vor der Etikettierung werden evtl. beim Transport des Hohlkörpers entstandene Kratzer auf der Oberfläche der Außenschicht beseitigt.

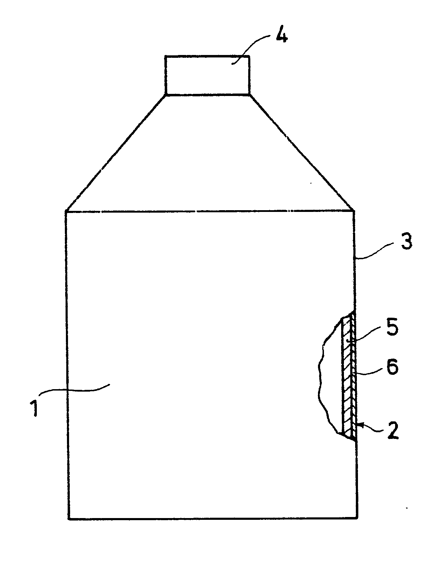

Die Erfindung ist nachstehend anhand der Zeichnung beispielsweise näher erläutert. Diese zeigt in der einzigen Figur in schematischer Darstellung ein Ausführungsbeispiel.

Ein Hohlkörper 1 in Flaschenform für ein Spül- oder Reinigungsmittel oder dgl. weist eine Außenwand 2, deren Außenfläche mit 3 bezeichnet ist, und eine Öffnung 4 auf.

Die Außenwand 2 besteht aus einer inneren Schicht 5 und einer äußeren Schicht 6. Dabei ist die innere Schicht 5 aus HDPE (Polyethylen hoher Dichte) und die äußere Schicht 6 aus LDPE (Polyethylen niedriger Dichte) oder HDPE (Polyethylen hoher Dichte) gebildet, wobei der Anteil der Innenschicht vorzugsweise bei 90 % und der Anteil der Außenschicht bei 10 % liegt. Die Außenschicht 6 ist farblos, wogegen die Innenschicht 5 mittels Farbpigmenten in einer bestimmten Farbe eingefärbt sein kann. Außerdem sind der Außenschicht 6 Additive zugefügt, was aus der Zeichnung nicht näher hervorgeht. Durch diesen zweischichtigen Aufbau der Außenwand 2 wirkt die Außenfläche 3 besonders sauber und glänzend. Dieser Glanzeffekt wird insbesondere auch durch den Zusatz der Additive verstärkt, wobei die Additive das Gleitverhalten in Abfüllanlagen beeinflußen und die Festigkeit des Hohlkörpers verbessern.

Der Hohlkörper 1 wird durch ein Extrusionsblasverfahren aus einem durch Coextrusion der beiden Polymere hergestellten Schlauch gebildet, wobei die Massetemperatur der Außenschicht 6 bei der Coextrusion geringer oder gleich der Massetemperatur der Innenschicht 5 ist.

Nach der Herstellung der Hohlköper 1 werden diese üblicherweise zwischengelagert, bevor sie gefüllt und etikettiert werden. Beim Transport der Hohlkörper 1 können durch mechanische Beanspruchungen Beschädigungen der äußeren Schicht 6 der Hohlkörper 1, wie Kratzer, entstehen. Diese Kratzer können nach der Befüllung der Hohlkörper 1 durch eine übliche Flammvorbehandlung vor der Etikettierung beseitigt werden. Eine derartige Flammvorbehandlung ist nämlich nicht nur dazu geeignet, die Haftung von Etiketten auf der äußeren Oberfläche von Hohlkörpern 1 zu verbessern, sondern beseitigt auch überraschend Beschädigungen der äußeren Schicht 6 von Hohlkörpern 1.

Natürlich ist die Erfindung nicht auf das in der Zeichnung beschriebene Ausführungsbeispiel beschränkt. Weitere Ausgestaltungen sind möglich, ohne den Grundgedanken zu verlassen. So ist insbesondere die genaue Zusammensetzung des Hohlkörpermaterials nicht festgelegt und dgl. mehr.

## Ansprüche

1. Hohlkörper aus Kunststoff mit einer glänzenden Außenfläche, welcher durch ein Extrusionsverfahren aus einem zweischichtigen Schlauch gebildet ist,
dadurch gekennzeichnet,
daß der Schlauch von einer HDPE (Polyethylen hoher Dichte) -Innenschicht (5) und einer ungefärbten Polyethylen-Außenschicht (6) mit Additiven gebildet ist.

2. Hohlkörper nach Anspruch 1,
dadurch gekennzeichnet,
daß die Außenschicht (6) aus LDPE (Polyethylen niedriger Dichte) gebildet ist.

Hohlkörper nach Anspruch 1,
dadurch gekennzeichnet,
daß die Außenschicht (6) aus HDPE (Polyethylen hoher Dichte) gebildet ist.

4. Hohlkörper nach Anspruch 1 oder einem der folgenden,
dadurch gekennzeichnet,
daß die Additive aus Ölsäureamid bestehen.

5. Hohlkörper nach Anspruch 1 oder einem der folgenden,
dadurch gekennzeichnet,
daß der Anteil der Innenschicht (5) etwa 90 % und der An teil der Außenschicht (6) etwa 10 % beträgt.

6. Hohlkörper nach Anspruch 1 oder einem der folgenden,
dadurch gekennzeichnet,
daß die Innenschicht (5) eingefärbt ist.

7. Hohlkörper nach Anspruch 1 oder einem der folgenden,
dadurch gekennzeichnet,
daß er zur Glättung der Außenschicht (6) einer Flammvorbehandlung unterzogen worden ist.